Europäisches Patentamt

European Patent Office

Office européen des brevets

(19)

(11) Veröffentlichungsnummer: **0 096 183**
**B1**

# (12) EUROPÄISCHE PATENTSCHRIFT

(45) Veröffentlichungstag der Patentschrift:
**27.12.89**

(21) Anmeldenummer: **83103478.0**

(22) Anmeldetag: **11.04.83**

(51) Int. Cl.⁴: **B 29 C 45/00**

(54) Verfahren zum Schutz der Formen beim Spritzgiessen.

(30) Priorität: **07.06.82 AT 2189/82**

(43) Veröffentlichungstag der Anmeldung:
**21.12.83 Patentblatt 83/51**

(45) Bekanntmachung des Hinweises auf die Patenterteilung:
**27.12.89 Patentblatt 89/52**

(84) Benannte Vertragsstaaten:
**AT BE CH DE FR GB IT LI NL SE**

(56) Entgegenhaltungen:
**EP-A-0 025 987**
**DE-A-2 306 169**
**GB-A-842 380**

(73) Patentinhaber: **Ludwig Engel KG, Ludwig- Engel-Strasse 1, A-4311 Schwertberg (AT)**

(72) Erfinder: **Lampl, Alfred, Dipl.- Ing. Dr., Schacherbergstrasse 2, A-4311 Schwertberg (AT)**
Erfinder: **Urbanek, Otto, Dipl.- Ing. Dr., Mozartstrasse 2, A-4320 Perg (AT)**

(74) Vertreter: **Hofinger, Engelbert, Torggler- Hofinger Wilhelm- Greil- Strasse 16, A-6020 Innsbruck (AT)**

## Beschreibung

Die Erfindung bezieht sich auf ein Verfahren zum Schutz der Formen beim Spritzgießen von Kunststoffen während der Schließung, wobei die bewegliche Formhälfte mit vorgegebenem Geschwindigkeitsprofil gegen die feststehende Form bewegt und der hydraulische Schließdruck auf einen Wert begrenzt wird, der um einen vorbestimmten, einstellbaren Betrag oberhalb eines Normalwertes liegt. Ein Verfahren dieser Art ist durch die DE-A-2 306 169 bekannt geworden.

Bereits vor vielen Jahren ist die Notwendigkeit erkannt worden, die teuren Spritzgußformen gegen Schäden zu schützen, die entstehen, wenn ein Fremdkörper, meistens ein hängengebliebener Spritzling, zwischen die Formhälften gerät. In diesem Sinne zeigt die GB-PS-1 140 118 eine Einrichtung, bei welcher nur jener Druck,der für die Schließbewegung der beweglichen Formspannplatte notwendig ist, auf.den Fremdkörper einwirkt, wogegen der Aufbau der vollen Schließkraft nach Schließen der Form unterbleibt. Festgestellt wird dabei das Vorliegen eines Fremdkörpers durch Schalter großer Ansprechgenauigkeit, die an einer der beiden Formspannplatten befestigt sind und durch einen an der anderen Formspannplatte angebrachten einstellbaren Stift beim vollständigen Formschluß gerade noch betätigt werden. Nachteilig an dieser Methode ist, daß auch der Eilgang des Schließteiles zur Überwindung der Reibung eine beträchtliche Kraft benötigt, die mehrere Tonnen betragen kann und damit zur Beschädigung empfindlicher Teile leicht ausreicht.

In DE-AS-1 230 552 wurde zur Verfeinerung des Formschutzes bereits vorgeschlagen, in geringem Abstand von der feststehenden Formträgerplatte federnd eine Formspannplatte anzubringen, an der zwei in den Steuerkreis des hydraulischen Antriebes eingefügte gegensätzlich schaltende Mikroschalter befestigt sind. Einer der Mikroschalter befindet sich in der Bewegungsbahn einer mit der beweglichen Formspannplatte verbundenen Schaltstange, der andere vor einer an der feststehenden Formträgerplatte befestigten Schaltstange. Der konstruktive Aufwand einer solchen Einrichtung ist relativ groß und vor allem ist es nachteilig, daß Formen verschiedener Höhe jeweils eine andere Einstellung größter Genauigkeit erforderlich machen.

Konstruktiv aufwendig ist auch die Lösung nach DE-AS-1 554 791, welche eine geringfügige Beweglichkeit der "feststehenden" Formspannplatte vorsieht. Vermieden wird bei dieser Ausführung allerdings die Notwendigkeit, verschiedene Schalter entsprechend der jeweiligen Formhöhe einzustellen, was bei fehlerhafter Einstellung zu einer Vergrößerung der Fehlermöglichkeiten statt zu deren Verringerung führt.

Die Formschutzeinrichtung nach DE-AS-2 065 229 setzt gesonderte Triebwerke zum Öffnen und Schließen der Form einerseits und zum Zuhalten derselben andererseits voraus. Schon dies bedingt einen wesentlichen Bauaufwand, der noch dadurch erhöht wird, daß bei dieser Einrichtung das Bewegungstriebwerk als gesamte Baueinheit gegen Federkraft verschiebbar ausgebildet sein muß.

In der Praxis durchgesetzt haben sich auf Grund der geschilderten Nachteile solche Einrichtungen, bei denen eine Begrenzung des Schließdruckes auf einen Wert angestrebt wird, bei dem es auch nicht zu Zerstörungen kommt, wenn sich irrtümlich Fremdkörper zwischen den Formhälften befinden. In diesem Sinne schlägt AT-PS-327 523 vor, im letzten Abschnitt der Schließbewegung automatisch ein Überdruckventil zu betätigen. Problematisch daran ist vor allem die richtige Einstellung dieses Ventils. Wenn sich nämlich temperaturbedingt oder alterungsbedingt die Maschinenteile nur schwer gegeneinander bewegen lassen, reicht die bei Öffnung des Überdruckventils verbleibende kinetische Energie unter Umständen zur vollständigen Schließung der Form nicht aus. Anderenfalls kann die Schließung der Form wieder zu rasch erfolgen. Tatsächlich hat sich bei Verwendung von Überdruckventilen zur Begrenzung des Schließdruckes, die willkürlich einstellbar sind, gezeigt, daß das Bedienungspersonal dazu neigt, hohe Einstellungen zu wählen, um das Schließen der Form immer sicherzustellen. Beschädigungen der Formen durch Fremdkörper sind die immer wieder beobachtete Folge.

Aus der oben erwähnten DE-A-2 306 169 ist ein Verfahren zum Schutz der Formen beim Spritzgießen von Kunststoffen während der Schließung bekannt, wobei sich die bewegliche Formhälfte mit vorgegebenem Geschwindigkeitsprofil gegen die feststehende Form bewegt und der hydraulische Schließdruck nach oben begrenzt wird.

Der Nachteil dieser Konstruktion ist der, daß die Maschine erst abschaltet, wenn ein bestimmter Maximaldruck überschritten wird. Dies kann in vielen Fällen bereits zu spät sein.

Zur Vermeidung der aufgezeigten Nachteile sieht die Erfindung vor, daß der Normalwert durch kontinuierliche Messung des zeitlichen Verlaufes des hydraulischen Druckes wenigstens in der Schlußphase der Schließbewegung eines vorangehenden Schließvorganges festgestellt worden ist und der Druckverlauf während des Schließvorganges überwacht wird, wobei der Schließvorgang immer abgebrochen wird, wenn der hydraulische Druck im Druckverlauf um den vorbestimmten Betrag oberhalb des gemessenen Normalwertes liegt.

Ein besonderer Vorteil der Erfindung besteht darin, daß langsam veränderliche Betriebsbedingungen, etwa Änderungen in der Zähigkeit der Hydraulikflüssigkeit, berücksichtigt werden können, indem der zur Reibungsüberwindung notwendige Druck immer wieder gemessen wird. Insbesondere kann vorgesehen sein, daß der Druckverlauf im unmittelbar vorangehenden Schließvorgang als Normalwert gewählt wird.

Einzelheiten des erfindungsgemäßen Verfahrens, sowie Einrichtungen zu dessen Durchführung werden anschließend anhand der Zeichnung näher erläutert. Fig. 1 zeigt ein Druckdiagramm für das Verfahren, Fig. 2 zeigt eine Mikroprozessorschaltung zur Realisierung des Verfahrens, und die Fig. 3 zeigt die schematische Darstellung der Hydraulikeinrichtung einer mit einer erfindungsgemäßen Formschutzeinrichtung ausgestatteten Maschine.

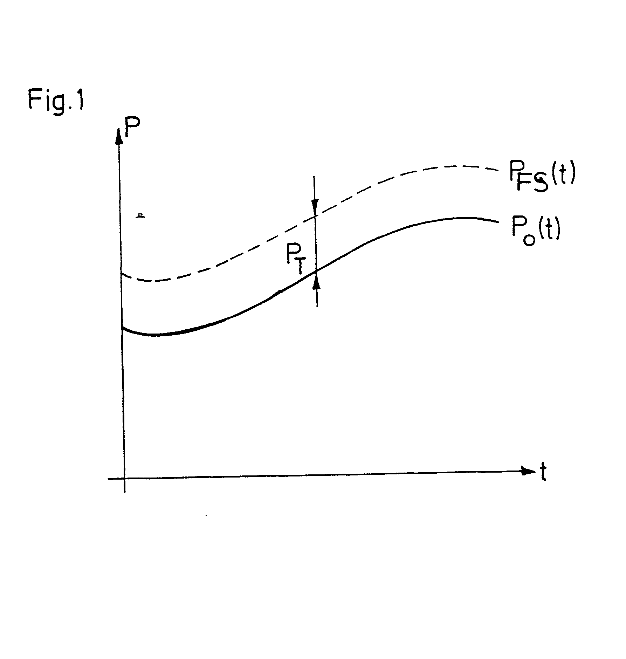

Gemäß dem erfindungsgemäßen Verfahren wird zunächst in einem bei leerem Werkzeug durchgeführten Schließvorgang, der zur Überwindung von Reibungswiderständen erforderliche Druck als Funktion der Zeit (Fig.1) oder des Weges gemessen.

Es wird der Minimaldruckverlauf $p_0(t)$ während der ganzen Formschutzphase gespeichert und während dieser ganzen Phase der Hydraulikdruck im Schließzylinder auf Abweichungen vom Minimaldruckverlauf überwacht. Überschreitet der Hydraulikdruck den Minimaldruck um mehr als den Toleranzwert $p_T$, wird der Schließvorgang augenblicklich abgebrochen.

Da nicht nur die Überschreitung eines maximalen Druckwertes vermieden werden, sondern eine Früherkennung von unzulässigen Druckabweichungen während der gesamten Formschutzphase möglich sein soll, empfiehlt sich die Verwendung eines Mikroprozessors.

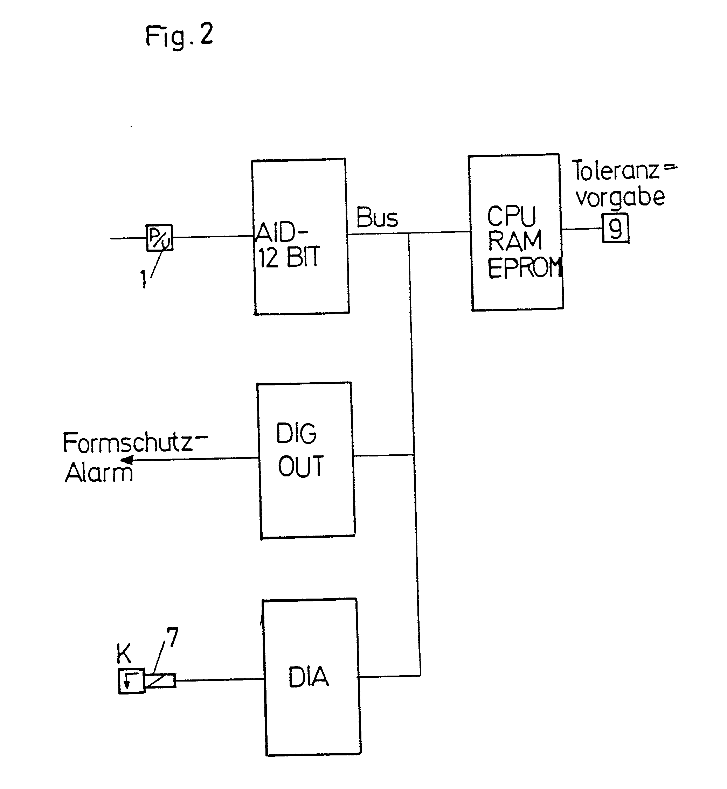

Wie aus Fig. 2 ersichtlich ist, kann die Überschreitung des in einem Vergleichszyklus festgestellten Druckwertes um einen vorgegebenen Toleranzwert zur Auslösung eines Formschutzalarmes herangezogen werden. Der dem Druckbegrenzungsventil 7 vorgegebene Wert wird um einen Fixbetrag höher gewählt, damit überhaupt ein Druck entstehen kann, welcher zur Auslösung des Formschutzalarmes führt. Andererseits ist der am Druckbegrenzungsventil 7 eingestellte Wert natürlich immer noch so niedrig, daß auch das Druckbegrenzungsventil 7 allein einen zuverlässigen Formschutz bieten würde.

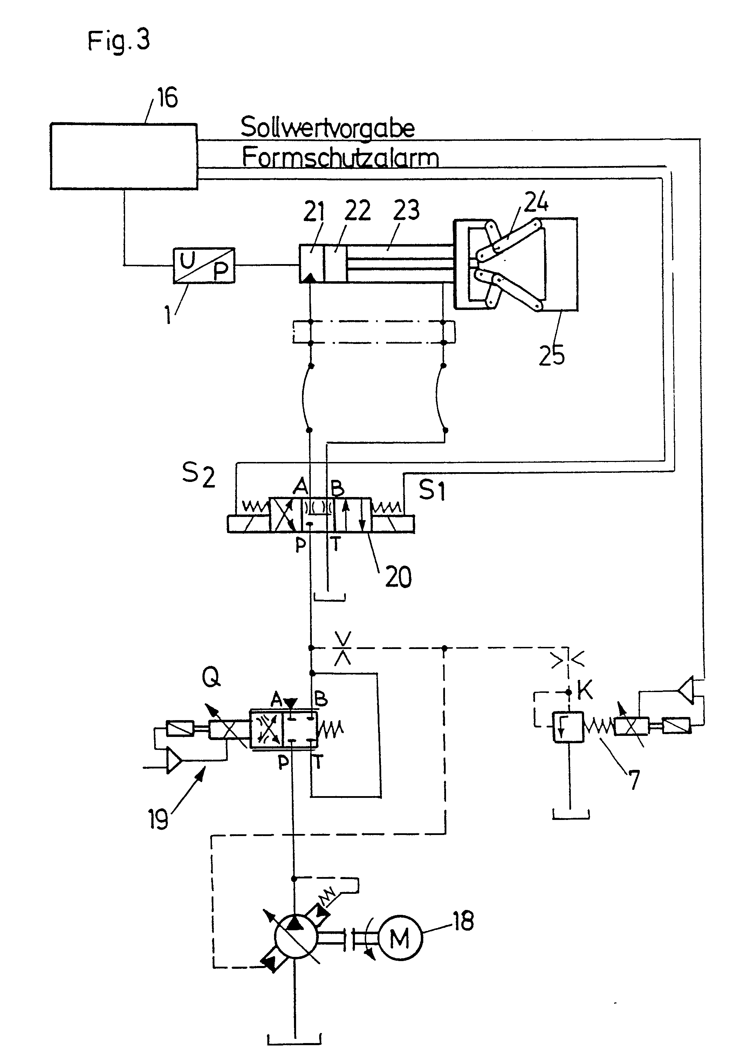

Fig. 3 stellt im Detail dar, wie durch die Formschutzschaltung 16, wie sie in Fig. 2 dargestellt ist, der Hydraulikdruck einer Schließeinrichtung begrenzt werden kann.

Von der gesamten Schließeinrichtung ist lediglich eine bewegliche Formplatte 25 angedeutet, die mittels einer Kniehebeleinrichtung 24 betätigt wird, welche durch einen Kolben 22 verschiebbar ist. Natürlich wäre die Erfindung auch auf voll hydraulische Schließsysteme, bei denen keine Kniehebel verwendet werden, anwendbar.

Während der Schließbewegung befindet sich der Steuerschieber 20 in der Stellung S1, in welcher der Zylinderraum 21 druckbeaufschlagt ist, wogegen der vordere Zylinderraum 23 mit dem Tank in Verbindung steht. Der Druckaufnehmer 1 mißt den Druck im Zylinderraum 21 und gibt ein entsprechendes Spannungssignal an die Formschutzschaltung 16 weiter. Stellt diese eine Überschreitung des Formschutzdruckes fest, wird der Formschutzalarm ausgelöst, welcher den Steuerschieber 20 in die Stellung S2 bringt, in welcher sich die Bewegung des Kolbens 22 und damit der beweglichen Formplatte 25 umkehrt.

Anstatt des Steuerschiebers 20 und vorzugsweise zusätzlich zu diesem, wird das Druckbegrenzungsventil 7 zum Formschutz herangezogen. Wie besprochen, ist dieses Proportionalventil dauernd auf einen Wert eingestellt, der geringfügig oberhalb des zulässigen Momentanwertes für den Formschutzdruck liegt.

Da die hydraulische Einrichtung, welche über eine Regelpumpe 18 betrieben wird, durch das Mengenregelventil 19 kontrolliert ist, ergibt sich bei jeder Schließbewegung grundsätzlich derselbe Druckverlauf, was die Voraussetzung dafür ist, daß erfindungsgemäß Abweichungen vom Druckverlauf bei einem erfindungsgemäßen vorangehenden Schließvorgang zur Auslösung des Formschutzes herangezogen werden kann.

Die Vorteile der Einrichtung sind durch leichte Bedienung und hohe Formsicherheit gegeben. Die Einstellung des Gerätes erfordert die Durchführung eines Schließvorganges bei leerem Werkzeug (Minimaldruckverlauf $p_0(t)$) und der Vorgabe des Toleranzbandes ($p_T$). Mit diesen einmaligen Einstellungen gewährleistet die Einrichtung durch die selbsttätige Korrektur eine gleichbleibende Schutzwirkung auch bei veränderten Betriebsbedingungen. Das Erkennen einer Schließbehinderung kann unmittelbar zur Beendigung des Schließvorganges herangezogen werden. Es kann aber auch bei Verwendung lediglich eines Druckbegrenzungsventiles die Umsteuerung der Einrichtung in üblicher Weise vom Ablauf einer Formschutzzeit abhängig gemacht werden, in der kein vollständiges Schließen der Form festgestellt worden ist.

**Patentansprüche:**

1. Verfahren zum Schutz der Formen beim Spritzgießen von Kunststoffen während der Schließung, wobei die bewegliche Formhälfte mit vorgegebenem Geschwindigkeitsprofil gegen die feststehende Form bewegt und der hydraulische Schließdruck auf einen Wert begrenzt wird, der um einen vorbestimmten, einstellbaren Betrag oberhalb eines Normalwertes liegt, dadurch gekennzeichnet, daß der Normalwert ($p_0$) durch kontinuerliche Messung des Zeitlichen Verlaufes des hydraulischen Drucks wenigstens in der Schlußphase der Schließbewegung eines vorangehenden Schließvorganges festgestellt worden ist und der Druckverlauf während des Schließvorganges überwacht wird, wobei der Schließvorgang immer abgebrochen wird, wenn der hydraulische Druck im Druckverlauf um den vorbestimmten Betrag ($p_T$) oberhalb des gemessenen Normalwertes ($p_0$) liegt.

2. Verfahren nach Anspruch 1 dadurch gekennzeichnet, daß der Druckverlauf im unmittelbar vorangehenden Schließvorgang als Normalwert gewählt wird.

## Claims

1. A process for protection of the moulds in the injection moulding of plastics material during the closure thereof wherein the movable mould half is moved towards the stationary mould with a predetermined speed profile and the hydraulic closure pressure is limited to a value which is above the normal value by a predetermined, adjustable amount, characterised in that the normal value ($P_0$) has been ascertained by continuous measurement of the variation in respect of time of the hydraulic pressure at least in the terminal phase of the closure movement of a preceding closure operation and the variation in pressure is monitored during the closure operation, wherein the closure operation is always stopped when the hydraulic pressure, in the variation in pressure, lies above the measured normal value ($P_0$) by the predetermined amount ($P_T$).

2. A process according to claim 1 characterised in that the variation in pressure in the immediately preceding closure operation is selected as the normal value.

## Revendications

1. Procédé de protection des moules lors du moulage par injection de matières plastiques pendant la fermeture, la moitié mobile de moule étant déplacée avec un profil de vitesse prédéterminé par rapport au moule fixe et la pression hydraulique de fermeture étant limitée à une valeur qui est supérieure d'une quantité prédéterminée et réglable à une valeur normale, caractérisé en ce que la valeur normale ($P_O$) a été déterminée par une mesure continue de l'évolution dans le temps de la pression hydraulique au moins dans la phase de terminaison du mouvement de fermeture dans une opération de fermeture précédente et l'évolution de la pression est contrôlée pendant le processus de fermeture, l'opération de fermeture étant toujours interrompue quand la pression hydraulique dans l'évolution de la pression est supérieure, de la quantité prédéterminée ($P_T$) à la valeur normale mesurée ($P_O$).

2. Procédé selon la revendication 1, caractérisé en ce que l'évolution de la pression dans le processus de fermeture immédiatement précédent est choisie comme valeur normale.

Fig.1

Fig. 2

## Fig. 3

Sollwertvorgabe
Formschutzalarm